# EUROPEAN PATENT APPLICATION

(11) **EP 3 992 853 A1**
(43) Date of publication of application: **04.05.2022**
(21) Application number: 20306317.7
(22) Date of filing: 03.11.2020
(51) Int. Cl.: G06K 19/07, G06K 19/077, G06K 7/00

(54) **METHOD FOR MANAGING A SMART CARD**

(71) Applicant: Thales DIS France SA, 92190 Meudon (FR)
(72) Inventor: PALADJIAN, Pierre, 92190 MEUDON (FR)
(74) Representative: Grevin, Emmanuel

(57) **Abstract**

The invention is a method for managing a card (10) comprising a communication interface including first and second pads (21, 22) and able to work in first and second operating modes which are mutually exclusive. The method comprises the following steps:
- coupling the card to a hardware device (40) designed to be coupled to the card in a first and a second positions of the card,
- upon detection of said coupling, identifying in which position the card is coupled and providing an electrical signal to the card on said first pad when the card is coupled in said first position or on said second pad when the card is coupled in said second position,
- on receipt of the electrical signal, activating the card in said first operating mode if the electrical signal has been received on said first pad and activating the card in said second operating mode if the electrical signal has been received on said second pad.

## Description

### (Field of the invention)

The present invention relates to methods for managing a smart card. It relates particularly to methods for setting a smart card in a specific operating mode.

### (Background of the invention)

Smart cards are portable small devices comprising a memory, a microprocessor and an operating system for computing treatments. They may comprise services applications like payment or telecom applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

A smart card may contain a biometric sensor like a fingerprint sensor which can contribute to the authentication of the user of the smartcard. A biometric smart card may embed a biometric reference data corresponding to the user of the smart card. Such a biometric reference data is recorded during an enrollment phase. A biometric smartcard usually embeds a biometric algorithm designed to generate a biometric reference data and another biometric algorithm designed to compare a data captured by the biometric sensor with the biometric reference data in order to authenticate the cardholder. The comparison algorithm may also be used to check that a newly generated biometric reference data is correct.

During the enrollment phase, it may be useful to check that a newly registered biometric reference data is sufficient to authenticate the genuine user. A checking step may be performed after the creation of the new biometric reference data to verify that the user may now be authenticated using a comparison with the newly registered biometric reference data. A card reader may be provided to the user so that the user may perform the enrollment phase autonomously. Several captured of biometric data (like a fingerprint for example) may be required to generate an acceptable biometric reference data. Unfortunately some card readers do not have a display which may guide the user for the sequence of captures and checking.

There is need to provide a device which facilitates the implementation of certain sequences of actions, in particular during an enrolment phase with a smart card.

### (Summary of the Invention)

The invention aims at solving the above mentioned technical problem.
An object of the present invention is a smart card comprising a contact communication interface including first and second pads. The smart card is able to work in first and second operating modes which are mutually exclusive. The smart card is configured to, on receipt of an electrical signal, activating the smart card in the first operating mode if the electrical signal has been received on the first pad and activating the smart card in the second operating mode if the electrical signal has been received on the second pad.

Advantageously, the smart card may comprise a biometric sensor and may be configured to create a new biometric reference by enrolling a user when the first operating mode has been activated. The smart card may be configured to check a previously stored biometric reference by scanning the user (e.g. his/her finger) when the second operating mode has been activated.

Advantageously, the electrical signal may be a power supply, the first pad may be any of contacts C2 to C8 defined by ISO/IEC 7816-2 and the second pad may be any of contacts C2 to C8 defined by ISO/IEC 7816-2, said first pad being different from said second pad.

Advantageously, the first pad may be the C7 contact as defined by ISO/IEC 7816-2 and the second pad may the C2 contact as defined by ISO/IEC 7816-2.

Another object of the present invention is a hardware device adapted to be coupled to a smart card comprising first and second contact pads. The hardware device is configured to be coupled to the smart card in a first and a second positions of the smart card. The hardware device is configured to identify in which position the smart card is coupled to the hardware device. The hardware device is configured to automatically provide an electrical signal to the smart card upon detection of coupling between the hardware device and the smart card. The hardware device is configured to provide the electrical signal on the first contact pad when the smart card is coupled in the first position and to provide the electrical signal on the second contact pad when the smart card is coupled in the second position.

Advantageously, the hardware device may have an inserting slot comprising two contact communication interfaces which are located on opposing internal faces inside said insertion slot.

Advantageously, the hardware device may comprise first and second inserting slots which are separate, the first inserting slot may comprise a first contact communication interface and the second inserting slot may comprise a second contact communication interface.

Advantageously, the hardware device may comprise two inserting slots which have separate insert entries and said two inserting slots may comprise a common contact communication interface.

Another object of the present invention is a method for managing a smart card comprising a contact communication interface that includes first and second contact pads. The smart card is able to work in first and second operating modes which are mutually exclusive. The method comprises the steps of:
- coupling the smart card to a hardware device designed to be coupled to the smart card in a first and a second positions of the smart card,
- upon detection of said coupling, identifying in which position the smart card is coupled to the hardware device and providing an electrical signal to the smart card by the hardware device on said first contact pad when the smart card is coupled in said first position or on said second contact pad when the smart card is coupled in said second position,
- on receipt of the electrical signal, activating the smart card in said first operating mode if the electrical signal has been received on said first pad and activating the smart card in said second operating mode if the electrical signal has been received on said second pad.

Advantageously, the smart card may comprise a biometric sensor, the smart card may create a new biometric reference by enrolling a user when said first operating mode is activated and the smart card may check a previously stored biometric reference by scanning the user when the second operating mode is activated.

Advantageously, the smart card may send to the hardware device a data through the contact communication interface, said data reflecting either which operating mode has been activated or the success of execution of a preset treatment depending on the activated operating mode.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary flow diagram for allowing automatic activation of an operating mode in a smart card according to an example of the invention,
- Figure 2 shows a system and a diagram of architecture of a biometric smart card according to an example of the invention,
- Figure 3 shows the upper side of a biometric card according to an example of the invention,
- Figures 4A and 4B show the front side and the rear side of a hardware device according to an example of the invention,
- Figure 5 shows a side of a hardware device having a single insertion slot according to an example of the invention,
- Figure 6 shows the front side of a hardware device having two insertion slots according to an example of the invention,
- Figure 7 shows a side of a hardware device having two insertion slots according to an example of the invention,
- Figure 8 shows a hardware device having two insertion slots according to an example of the invention, and
- Figures 9A and 9B show the upper side of a hardware device having two insertion slots and coupled with a card according to an example of the invention.

### (Detailed description of the preferred embodiments)

The invention may apply to any type of smart card having a communication interface able to work in contact mode and able to work in at least two operating modes. The smart card may be a banking smart card, an access badge or an identity document for instance.

The invention is well-suited for biometric cards which are designed to communicate through at least one contact protocol.

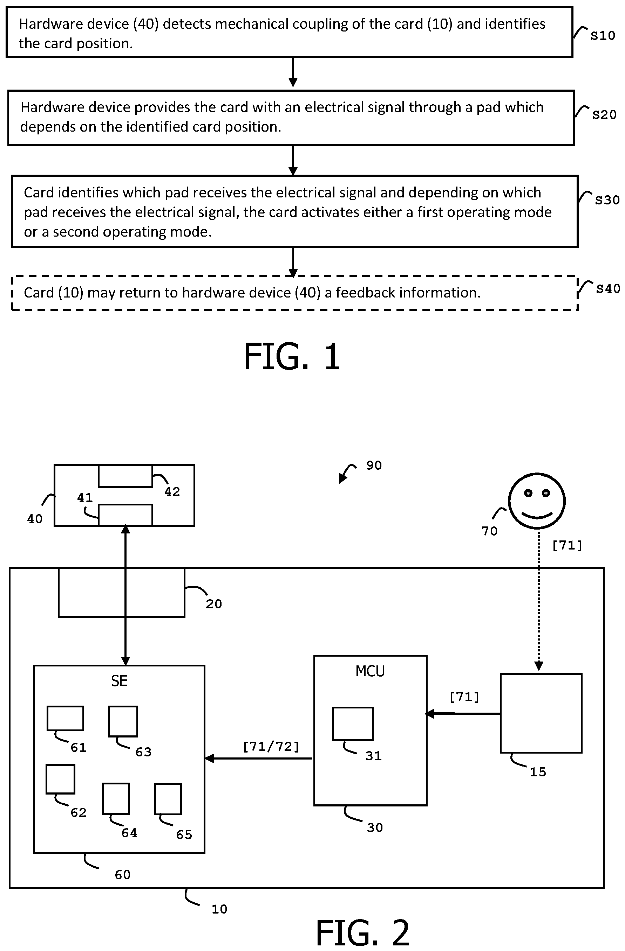

Figure 1 depicts a first exemplary flow diagram for allowing automatic activation of an operating mode in a smart card according to an example of the invention.

In this example, the smart card 10 may be a banking card intended to be used by its associated user (i.e. bank customer) for payment or cash withdrawal. The smart card comprises a contact communication interface which includes at least two separate contact pads. The smart card is designed to work in first and second operating modes which are mutually exclusive. In other words, when one operating mode is activated in the smart card, the other operating mode is disabled.

A hardware device 40 comprises at least a contact communication interface 41 and is able to be coupled to the card according to two positions of the card.

At step S10, the smart card 10 is mechanically coupled to the hardware device. The coupling may be performed by inserting the card in a slot of the hardware device. The hardware device 40 detects the position of the inserted card.

At step S20, upon detection of the coupling, the hardware device provides an electrical signal to the smart card through a card pad which depends on the identified card position.

At step S30, the smart card identifies which pad receives the electrical signal. Then the smart card activates one of the operating modes if the electrical signal has been received on a preset card pad and activates the other operating mode if the electrical signal has been received on the other card pad. Thus, depending on which card pad receives the electrical signal, the smart card activates either one operating mode or the other operating mode.

In one embodiment, the electrical signal is a power supply. Alternatively the electrical signal may be a coded sequence of information, a message or a command.

In a preferred embodiment, the smart card embeds a biometric sensor designed to capture fingerprint data and is designed to work in two operating modes: Enrollment and Checking. If the smart card receives the electrical signal through its first pad, it automatically activates the Enrollment mode in which the smart card is configured to create a new biometric reference (or update an existing biometric reference) by using a fingerprint captured by the biometric sensor. If the smart card receives the electrical signal through its second pad, it automatically activates the Checking mode in which the smart card is configured to check a previously stored biometric reference by using a fingerprint captured by the biometric sensor.

An advantage of an embodiment of the invention is to allow the automatic activation of a specific behavior of the card depending on the way the user insert the card in the hardware device.

Advantageously, the smart card may send to the hardware device a data through its own contact communication interface to provide a feedback to the hardware device at an optional step S40. The sent data may reflect either which operating mode is activated or the success of execution of a preset treatment that depends on the activated operating mode. For instance, the sent data may specify that the enrollment mode has been enabled into the card or that the new biometric reference has been successfully generated and stored into the card. In another example, the sent data may specify that the checking operation of the biometric reference failed. The hardware device may provide the user with the feedback received from the card. For instance, the hardware device may interpret the received data and light a LED or trigger other human understandable signal accordingly. Thanks to this mechanism, the user may be aware of the result of the operation performed by the card. (E.g. Enrollment success/failure or check biometric reference success/failure.)

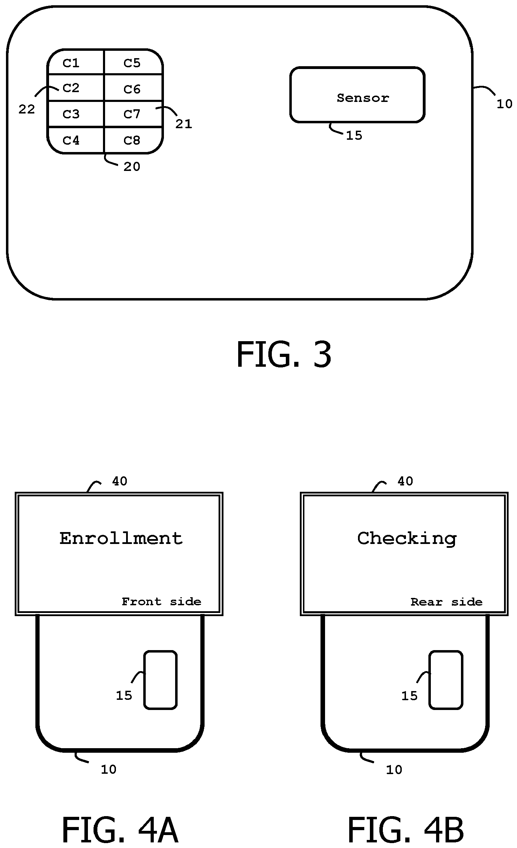

Figure 3 shows the upper side of a smart card according to an example of the invention.

In this example, the smart card 10 is a biometric card comprising a fingerprint scanner 15 and a contact communication interface 20 which has eight contact pads C1 to C8.

In one embodiment the first pad 21 which corresponds to the activation of the Enrollment mode (i.e. first operating mode) is the pad C7 as defined by ISO/IEC 7816-2 while the second pad 22 which corresponds to the activation of the Checking mode (i.e. second operating mode) is the pad C2 as defined by ISO/IEC 7816-2. The pad C7 is usually dedicated to data Input/Output (I/O) and the pad C2 is usually dedicated to Reset (RST) when the card communicates with a conventional card reader.

It should be noted that the smart card 10 of the example of Figure 3 has three different operating modes, Enrollment mode, Checking mode and conventional mode in which the card communicates with a reader according to a conventional way. The conventional way may comply with T=0 or T=1 protocol as defined by ISO/IEC 7816-3 (Third edition dated 2006-11-01) for instance. The card may be configured to behave according to more than two or three operating modes.

The card may have a biometric sensor 15 which is different from a fingerprint sensor. For instance, the biometric sensor 15 may be designed to capture voice or another type of biometric data.

In one embodiment, the electrical signal may be a power supply which is received on a pad different from the pad C1. The card may be designed to get energy through a pad different from the pad C1 for activating a preset operating mode.

In one embodiment, the electrical signal may be a coded sequence of information, a message or a command received through any of the available contact pad C1 to C8.

Figure 4A shows the front side and Figure 4B shows the rear side of a hardware device according to an example of the invention.

A biometric card 10 comprises a biometric sensor 15 on its upper side. The hardware device 40 has a single insertion slot comprising two separate contact communication interfaces designed to communicate with the smart card 10.

The hardware device is adapted to be coupled to the smart card 10 in a first and a second positions of the smart card. In other words, the hardware device may receive the card in two distinct position of the card: either the front side of the hardware device and the upper side of the card are on the same side or the rear side of the hardware device and the upper side of the card are on the same side.

The hardware device is configured to identify in which position the smart card is coupled to the hardware device.

The hardware device is adapted to automatically provide an electrical signal to the smart card upon detection of coupling between the hardware device and the smart card. The hardware device provides the electrical signal on a first contact pad of the smart card when the card is coupled in the first position. The hardware device provides the electrical signal on a second contact pad (different from the first contact pad) of the card when the smart card is coupled in the second position.

The hardware device may detect in which position the card is coupled by using a mechanical sensor which is pushed by the card body or may identify which of its contact communication interfaces is in contact with the communication interface of the card.

At Figure 4A, the biometric card 10 has been inserted in the hardware device 40 so that the upper side of the smart card and the front side of the hardware device are on the same side. An inscription "Enrollment" is written on the front side of the hardware device. The cardholder knows that when the card is inserted as shown at Figure 4A, the card will automatically switch in Enrollment operating mode.

At Figure 4B, the biometric card 10 has been inserted in the hardware device 40 so that the upper side of the smart card and the rear side of the hardware device are on the same side. An inscription "Checking" is written on the front side of the hardware device. The cardholder knows that when the card is inserted as shown at Figure 4B, the card will automatically switch in Checking operating mode.

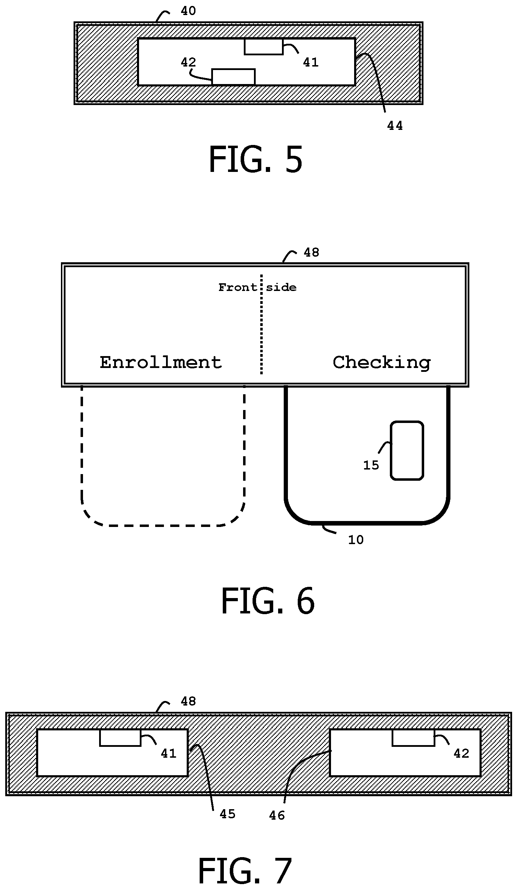

Figure 5 shows a side edge of a hardware device having a single insertion slot according to an example of the invention.

The hardware device 40 is similar to the one shown at Figures 4A and 4B.

The hardware device has a single insertion slot 44 which comprise two separate contact communication interfaces 41 and 42. More precisely, the contact communication interfaces are located on opposing internal faces inside the insertion slot 44.

When the smart card 10 is inserted in the insertion slot 44 as shown at Figure 4A, the contact communication interface 20 of the card is connected to the contact communication interface 41 of the hardware device.

Similarly, when the smart card 10 is inserted in the insertion slot 44 as shown at Figure 4B, the contact communication interface 20 of the card is connected to the contact communication interface 42 of the hardware device.

Figure 6 shows the front side of a hardware device having two insertion slots according to an example of the invention.

A smart card 10 is inserted in the insertion slot located at the right part of the hardware device 48. As shown in dashed line, the card 10 may be inserted in the other insertion slot located at the left part of the hardware device.

An inscription "Enrollment" is written on left part of the front side of the hardware device 48 so that the cardholder knows that when the card is inserted in the left part, the card will automatically switch in Enrollment operating mode.

Similarly, an inscription "Checking" is written on the right part of the front side of the hardware device so that the user is aware that when the card is inserted in the slot of the right part, the card will automatically switch in Checking operating mode.

Figure 7 shows a side edge of the hardware device of Figure 6.

The hardware device 48 has a two distinct insertion slots 45 and 46 which are located on the same side of the hardware device. The first inserting slot 45 comprises a first contact communication interface 41 and the second inserting slot 46 comprises a second contact communication interface 42.

When the smart card 10 is inserted in the insertion slot 45, the contact communication interface 20 of the card is connected to the contact communication interface 41 of the hardware device. Similarly, when the smart card 10 is inserted in the insertion slot 46, the contact communication interface 20 of the card is connected to the contact communication interface 42 of the hardware device 48.

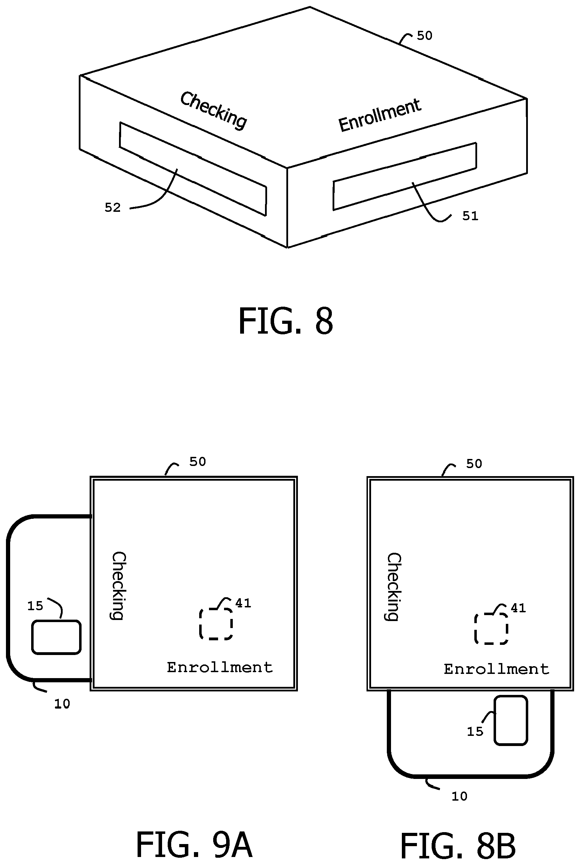

Figure 8 shows a hardware device having two insertion slots according to an example of the invention.

The hardware device 50 has a two distinct insertion slots 51 and 52 which are located on different sides of the hardware device. The inserting slots 51 and 52 have separate insert entries and comprise a common (shared) contact communication interface.

An inscription "Enrollment" is written on the upper side of the hardware device in correspondence with the inserting slot 51 so that the cardholder knows that when the card is inserted in the inserting slot 51, the card will automatically switch in Enrollment operating mode.

An inscription "Checking" is written on the upper side of the hardware device in correspondence with the inserting slot 52 so that the cardholder knows that when the card is inserted in the inserting slot 52, the card will automatically switch in Checking operating mode.

Figures 9A and 9B show the upper side of the hardware device of Figure 8.

At Figure 9A, the hardware device 50 is coupled with a card 10 inserted in the inserting slot 52.

At Figure 9B, the hardware device 50 is coupled with a smart card 10 inserted in the inserting slot 51.

Both inserting slots 51 and 52 share common area that comprises a unique contact communication interface 41 (shown in dashed line because not visible from the top of the hardware device 50). Whatever inserting slot the card is inserted into, the contact communication interface of the card is connected to the common contact communication interface 41.

Figure 2 shows a system and a diagram of architecture of a biometric smart card according to an example of the invention.

The system 90 comprises a smart card 10 and a hardware device 40. In this example, the smart card 10 is a biometric banking card allocated to a user 70.

The smart card 10 has a contact communication interface 20 and embeds a biometric sensor 15 designed to capture fingerprint data. The smart card embeds a sensor controller 30 coupled to the biometric sensor 15 and configured to get data 71 (also named raw biometric data) captured by the sensor and to apply treatments on the captured data. For instance, the controller may be a processing unit (also named processor unit) like a microcontroller unit (MCU). The controller 30 may comprise a firmware 31 able to detect spoofing attacks on the sensor 15. Optionally, the firmware 31 may also be designed to extract remarkable items 72 from the raw biometric data 71 collected by the sensor 15.

The smart card embeds a secure chip 60 (also called secure element) comprising a hardware processing unit, memory and an operating system (not shown). In one embodiment, the non-volatile memory stores software instructions which are executed by the processor to perform the functions of the secure element. In one embodiment, the functions of the secure element 60 may be implemented as pure hardware solution or a combination of firmware and hardware.

The secure element is configured to communicate with the controller. The smart card may comprise a reference biometric data 61 which has been enrolled by the user 70 of the card.

The controller 30 may be configured to establish a communication channel with the secure element 60. The controller 30 and the secure element 60 may communicate through I2C (Inter-Integrated Circuit), through SPI (Serial Peripheral Interface), through SWP (Single Wire Protocol) or any relevant protocol.

In the example of Figure 2, the card 10 is coupled to the hardware device 40.

The secure element 60 may comprise a generator engine 62 designed to generate a reference biometric data from the biometric data 71 collected by the sensor. Advantageously, the generator engine 62 may be configured to extract remarkable items 72 from the biometric data 71.

The secure element 20 comprises a biometric algorithm 63 aiming at comparing the reference biometric data 61 with remarkable items extracted from the biometric data 71 collected by the sensor. The comparison is also named matching operation.

The secure element 60 is linked to the contact communication interface 20.

The secure element 60 comprises a processor and a non-volatile memory (not shown).

In one embodiment, the secure element 60 may be configured to perform the features of the controller 30 so that the card 10 has a single hardware component (i.e. the chip 60) which is designed to carry out functions of both the secure element 60 and the controller 30.

The secure element 60 comprises a detector agent 64 configured to identify on which pad the electrical signal is received.

The secure element 60 comprises an activator agent 65 configured to activate the relevant operating mode according to the pad identified by the detector agent 64.

Thanks to an embodiment of the invention, the user of the card may easily understand what the current internal treatment of the smart card is. The user has the opportunity to select the appropriate behavior of the card by choosing the relevant position of the card when inserting it in the hardware device.

The invention is not limited to the described embodiments or examples. In particular, the described examples and embodiments may be combined.

The invention is not limited to biometric smart cards and may apply to any type of smart cards able to run in several operating modes.

## Claims

1. A smart card (10) comprising a contact communication interface (20) including first and second pads (21, 22), said smart card being able to work in first and second operating modes which are mutually exclusive,
**characterized in that** said smart card is configured to:
- On receipt of an electrical signal, activating the smart card in said first operating mode if the electrical signal has been received on said first pad and activating the smart card in said second operating mode if the electrical signal has been received on said second pad.

2. The smart card according to claim 1, wherein said smart card comprises a biometric sensor (15), wherein said smart card is configured to create a new biometric reference by enrolling a user when said first operating mode is activated and wherein said smart card is configured to check a previously stored biometric reference (61) by scanning the user when said second operating mode is activated.

3. The smart card according to claim 1, wherein said electrical signal is a power supply, wherein said first pad is any of contacts C2 to C8 defined by ISO/IEC 7816-2 and said second pad is any of contacts C2 to C8 defined by ISO/IEC 7816-2, said first pad being different from said second pad.

4. The smart card according to claim 3, wherein said first pad is the C7 contact as defined by ISO/IEC 7816-2 and said second pad is the C2 contact as defined by ISO/IEC 7816-2.

5. A hardware device (40) adapted to be coupled to a smart card comprising first and second pads (21, 22),
**characterized in that** said hardware device is configured to be coupled to the smart card in a first and a second positions of the smart card,
**in that** the hardware device is configured to identify in which position the smart card is coupled to the hardware device,
**in that** the hardware device is configured to automatically provide an electrical signal to the smart card upon detection of coupling between the hardware device and the smart card, and
**in that** the hardware device is configured to provide said electrical signal on said first pad when the card is coupled in said first position and to provide said electrical signal on said second pad when the card is coupled in said second position.

6. The hardware device according to claim 5, wherein said hardware device has an inserting slot (44) comprising two contact communication interfaces (41, 42) which are located on opposing internal faces inside said insertion slot.

7. The hardware device according to claim 5, wherein said hardware device comprises first and second inserting slots (45, 46) which are separate and wherein said first inserting slot comprises a first contact communication interface (41) and said second inserting slot comprises a second contact communication interface (42).

8. The hardware device according to claim 5, wherein said hardware device comprises two inserting slots which have separate insert entries and wherein said two inserting slots comprise a common contact communication interface (41).

9. The hardware device according to claim 5, wherein said electrical signal is a power supply, wherein said first pad is any of contacts C2 to C8 defined by ISO/IEC 7816-2 and said second pad is any of contacts C2 to C8 defined by ISO/IEC 7816-2, said first pad being different from said second pad.

10. The hardware device according to claim 9, wherein said first pad is the C7 contact as defined by ISO/IEC 7816-2 and said second pad is the C2 contact as defined by ISO/IEC 7816-2.

11. A method for managing a smart card (10) comprising a contact communication interface (20) including first and second pads (21, 22), said smart card being able to work in first and second operating modes which are mutually exclusive,
**characterized in that** said method comprises the steps:
- coupling said smart card to a hardware device (40) designed to be coupled to the smart card in a first and a second positions of the smart card,
- upon detection of said coupling, identifying in which position the smart card is coupled to the hardware device and providing an electrical signal to the smart card by the hardware device on said first pad when the card is coupled in said first position or on said second pad when the card is coupled in said second position,
- on receipt of the electrical signal, activating the smart card in said first operating mode if the electrical signal has been received on said first pad and activating the smart card in said second operating mode if the electrical signal has been received on said second pad.

12. The method according to claim 11, wherein said smart card comprises a biometric sensor, wherein said smart card creates a new biometric reference by enrolling a user when said first operating mode is activated and wherein said smart card checks a previously stored biometric reference by scanning the user when said second operating mode is activated.

13. The method according to claim 11, wherein said electrical signal is a power supply, wherein said first pad is any of contacts C2 to C8 defined by ISO/IEC 7816-2 and said second pad is any of contacts C2 to C8 defined by ISO/IEC 7816-2, said first pad being different from said second pad.

14. The method according to claim 13, wherein said first pad is the C7 contact as defined by ISO/IEC 7816-2 and said second pad is the C2 contact as defined by ISO/IEC 7816-2.

15. The method according to claim 11, wherein said smart card sends to said hardware device a data through said contact communication interface (20) and wherein said data reflects either which operating mode is activated or the success of execution of a preset treatment depending on the activated operating mode.
